# EUROPÄISCHE PATENTANMELDUNG

(11) **EP 4 447 283 A1**
(43) Veröffentlichungstag der Anmeldung: **16.10.2024**
(21) Anmeldenummer: 23167332.8
(22) Anmeldetag: 11.04.2023
(51) Int. Cl.: H02K 3/30

(54) **ISOLATIONSSYSTEM**

(71) Anmelder: Siemens Aktiengesellschaft, 80333 München (DE); Siemens Mobility GmbH, 81739 München (DE)
(72) Erfinder: Lang, Steffen, 91352 Hallerndorf (DE); Maleika, Marek, 90766 Fürth (DE); Müller, Niels, 91166 Georgensgmünd (DE); Ochsenkühn, Manfred, 92348 Berg (DE); Schemmel, Florian, 90455 Nürnberg (DE)
(74) Vertreter: Siemens Patent Attorneys

(57) **Zusammenfassung**

Durch die vorliegende Erfindung wird ein rationeller Prozess, der hoch automatisierbar ist, möglich. Die Nachteile des VPI-Prozesses werden vermieden und der Einsatz von Glimmer optional ganz vermieden. Durch den Einsatz des isolierenden Materials in Form von unter anderem oder allein vorliegender teilentladungsresistenter Folie und/oder Spulen-Abdeckung aus einem Polymerblend mit Faserverstärkung können dünne Wandstärken realisiert werden, was die Effizienz der Maschine erhöht. Durch die Einbringung von Faserverstärkung handelt es sich um einen sehr robusten Prozess.

## Beschreibung

Die Erfindung betrifft allgemein das Gebiet der Isolierung von elektrischen Leitern gegen Teilentladung im Hochspannungsbereich. Insbesondere betrifft die Erfindung ein Isolationssystem und dort die Hauptisolation einer Leiterwicklung im Ständerblechpaket einer elektrischen rotierenden Maschine, insbesondere eines Elektromotors, z.B. eines Antriebsmotors und/oder eines Generators.

Elektrische Maschinen, wie z.B. Motoren und Generatoren des Hochspannungsbereichs, weisen elektrische Leiter, eine Hauptisolation, gegebenenfalls eine Innenpotentialsteuerung "IPS", einen Außenglimmschutz "AGS" und einen Endenglimmschutz "EGS" in einem Ständerblechpaket auf. Die Hauptisolation aus Teilleiterisolation und Hauptisolierung dient dem Zweck, die Leiter gegeneinander, gegen das Ständerblechpaket und gegen die Umgebung elektrisch zu isolieren. Beim Betrieb der elektrischen Maschine können sich durch elektrische Teilentladungen so genannte "Treeing"-Kanäle in der Hauptisolation ausbilden. Als Folge der "Treeing"-Kanäle kann es zu einem elektrischen Durchschlag durch die Hauptisolation kommen.

Als "Hochspannungsbereich" wird vorliegend die elektrische Energietechnik, die mit einer Hochspannung im Bereich über 700V - bis einschließlich 52kV - arbeitet, verstanden. Dadurch sind auch Isolationssysteme mit Isolationsbandage, also einem festen Isolationswerkstoff, z.B. einem Glimmerband, die für die schnellladefähigen Antriebssysteme der Automobilindustrie interessant sind, mitumfasst.

Eine Barriere in Form eines festen Isolationswerkstoffes gegen die Teilentladungen im Betrieb der elektrischen rotierenden Maschine wird bislang hauptsächlich durch den Einsatz von Glimmer in Isolationssystemen erreicht, welcher eine hohe Teilentladungsbeständigkeit hat. Der Glimmer wird in Form von plättchenförmigen Glimmerpartikeln mit einer herkömmlichen Partikelgröße von mehreren 100 Mikrometern bis zu mehreren Millimetern zu einem Glimmerpapier verarbeitet, welches nachfolgend auf einem Träger aufgesetzt und verklebt wird, so dass die Glimmerpartikel den festen Isolationswerkstoff in Form eines Flächenisolationsstoffs, insbesondere als Glimmerbreitbahn, ergeben. Aus dieser Glimmerbreitbahn wird ein Glimmerband geschnitten, das zur Herstellung der Hauptisolation aus Teilleiterisolation und Hauptisolierung um den Leiter gewickelt wird. Darauffolgend wird zur Herstellung des Isolationssystems das Elektroisolations-Glimmerwickelband mit einem flüssigen Kunstharz imprägniert und anschließend wird das Kunstharz mit dem darin befindlichen Glimmerband ausgehärtet.

Bekannt sind derartige Isolationssysteme beispielsweise unter der Marke "Micalastic^{®}", bei dem in einem Vakuum-Druck-Imprägnierverfahren die Hauptisolation, ein Glimmerwickelband als festen Isolationswerkstoff umfassend, mit einem Bisphenol-Epoxidharz imprägniert wird.

Micalastic^{®} ist auch aus der EP2763142A1 und der DE 102011083228A bekannt. Dabei wird grundsätzlich der Leiter mit Glimmerband umwickelt, dann wird der umwickelte Leiter in Kunstharz getaucht und unter Vakuum-Druck-Bedingungen imprägniert -"VPI" steht für "Vacuum-Pressure-Impregnation"-, das imprägnierte Ständerblechpaket wird aus dem Tauchbad wieder herausgenommen und bei erhöhter Temperatur von ca. 120°C im Ganzen stundenlang getempert, wodurch das Imprägnierharz ausgehärtet wird.

Zur Verbesserung der Teilentladungsbeständigkeit der Hauptisolation ist der Einsatz nanoskaliger Partikel bekannt, die in dem Kunstharz vor dem Imprägnieren dispergiert werden. Durch die Anwesenheit der Partikel verkürzt sich jedoch die Topfzeit des Kunstharzes im Tauchbad, was sich insbesondere in einer voranschreitenden Polymerisierung des Kunstharzes vor und während der Imprägnierung zeigt und teilentladungsgefährdete Bereiche durch Lufteinschlüsse bei unvollständiger Imprägnierung hinterlässt.

Abgesehen von den Nachteilen einer VPI Tauchbad-Isolations-Herstellung ist die Produktion eines Isolationssystems in Form einer Glimmerbreitbahn und/oder eines Glimmerbandes aufwändig und teuer.

Insbesondere werden auch in Traktionsmotoren für Nutauskleidungen aufgrund der Anforderungen bislang glimmerhaltige Laminate mit z.B. mAramid und Polyimid als Träger eingesetzt. Glimmer ist ein Naturprodukt und wird in Form von Glimmerschiefer abgebaut. Entsprechend sind die Ressourcen begrenzt, Glimmer ist je nach Abbaugebiet Qualitätsschwankungen unterlegen, nicht immer gleich gut verfügbar und die Beschaffung mit erheblichen Kosten verbunden, ganz zu schweigen von der aufwändigen Verarbeitung zur Herstellung des Glimmerbandes als Flächenisolationsstoff.

Grundsätzlich ist es möglich, elektrische Motoren bei Temperaturen bis zu 155 °C einzusetzen. Dies ist die übliche Betriebstemperatur bei großen Antriebsmotoren. Bei solchen Temperaturen wird das Isolationssystem üblicherweise aus epoxidbasierten duroplastischen Kunststoffen, die als Imprägnierharz über der Isolationsbandage vergossen werden -siehe Beschreibung zu Micalastic^{®}, aufgebaut. Die elektrischen Verluste sind hier geringer und die Abwärme sorgt für eine maximale Aufheizung der Isolation bis zu 155 °C.

Die Leistungsdichte einer solchen Maschine lässt sich nun nur entweder durch Erhöhen der Spannung oder aber durch Erhöhen der Stromstärke erreichen. Beim Erhöhen der Spannung ist das Isolationssystem notwendigerweise so ausgelegt, dass es eine höhere Feldstärke dauerhaft abbauen kann, was aktuell nicht mit einem kommerziell verfügbaren Isolationssystem möglich ist.

Wird die Stromstärke erhöht, wird das Isolationssystem deutlich stärker, kurzzeitig sogar deutlich über 200 °C thermisch belastet. Die Geometrie von Traktionsspulen wurde auf die elektrischen Festigkeiten von Polyimid und die mechanischen Eigenschaften von mAramid angepasst.

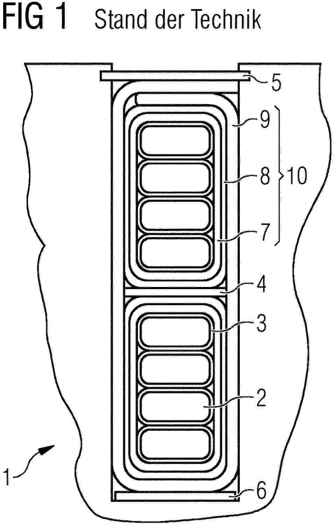

Diese Werkstoffe limitieren jedoch aufgrund ihrer Eigenschaften das Wicklungsdesign - siehe Figur 1, die gemäß Tu-IK 087 "Micalastic-THD^{®}" den Stand der Technik zeigt.

Die Figur 1 zeigt am Beispiel eines modernen Bahnantriebs die Wicklungen mit Glimmerpapier in einer Nut eines Elektromotors. Moderne Bahnantriebe werden zumeist über Spannungs-Zwischenkreis-Umrichter gespeist. Die dabei an der Isolierung auftretende Spannungsbelastung ist höher als bei Betrieb am Sinusnetz. Je nach Umrichtertyp (z.B. IGBT oder HV-GTO Halbleiterventile), Zwischenkreisspannung und Kabellänge kann die Höhe der Spannungsbelastung sehr unterschiedlich sein. Dem wird durch drei verschiedene Spannungsklassen 1000V, 2000V und 4000V, Rechnung getragen.

Neben den elektrischen Anforderungen kommt bei Bahnmotoren aber auch der thermischen Beständigkeit - z.B. Wärmeklasse 220(R)-, der mechanischen Festigkeit und der Beständigkeit gegenüber Umwelteinflüssen eine besondere Bedeutung zu.

Bezüglich der Werkstoffe und dem Systemaufbau der Isolationsmaterialen und Isolationsdicken, respektive Lagenzahlen werden bislang Polyimide und mAramid in Verbindung mit Glimmerplättchen vorzugsweise eingesetzt.

Polyimide werden generell als Lackisolierungen von elektrischen Leitungen eingesetzt, allerdings sind sie in ihren mechanischen Eigenschaften begrenzt belastbar, was die Geometrie von Spulen für Traktionsmotoren einschränkt. mAramid ist bezüglich der elektrischen Festigkeiten sehr begrenzt einsetzbar, besitzt aber hervorragende mechanische Eigenschaften.

Die Teilleiter einer Wicklung sind bevorzugt Kupferflachdrähte, die in einer Wicklung als Stapel mit Teilleiterisolation in die Nut eingesetzt werden.

Aufgabe der vorliegenden Erfindung ist es, massenfertigungstauglich verarbeitbare Isolationsmaterialien zur Herstellung eines Isolationssystems - insbesondere für Blechständerpakete in Elektromotoren - zur Verfügung zu stellen, die nachhaltiger, kostengünstiger und flexibler als das bisher übliche imprägnierte Glimmerband mit Polyimid und mAramid sind, den thermischen Anforderungen eines Isoliersystems der Wärmeklasse 200 oder sogar 220 °C genügen und trotzdem in den Eigenschaften bezüglich der Teilentladungsresistenz, der elektrischen Festigkeit mit Polyimid und bezüglich der mechanischen Eigenschaften mit mAramid vergleichbar sind. Zudem ist Aufgabe der vorliegenden Erfindung, die Menge an Glimmer, die in Isolationssystemen verarbeitet wird, zu reduzieren.

Diese Aufgaben werden durch den Gegenstand der vorliegenden Erfindung, wie er in der Beschreibung und den Ansprüchen offenbart wird, gelöst.

Dementsprechend ist Gegenstand der vorliegenden Erfindung ein Isolationssystem für elektrische Leiter in einem Ständerblechpaket, Verstärkungsfasern als Fasern, Vlies, Gelege und/oder als Gewebe und ein Isolationsmaterial, insbesondere in Form einer Folie umfassend, wobei das Isolationsmaterial ein Polymerblend aus einem Copolymer auf Grundlage von Polyetherimid und Siloxan mit zumindest einem Hochtemperaturthermoplasten geblendet, enthält und wobei der Hochtemperaturthermoplast teilkristallin vorliegt.

Allgemeine Erkenntnis der Erfindung ist es, dass bei Polyetherimid-Siloxan-Copolymeren ein enormes Potential als Isoliermaterial im Mittel- und Hochspannungsbereich hinsichtlich der Beständigkeit gegenüber Teilentladungen erkannt und nachgewiesen wurde. Insbesondere wurde auch erkannt, dass in den Copolymeren aus Polyetherimid und Siloxan wegen der weniger polaren Seitengruppen des Siloxans gegenüber dem reinen Polyetherimid als "Verunreinigung" wirken, wodurch die Glasübergangstemperatur sinkt. Zusätzlich wirkt der Siloxananteil wie ein "Weichmacher", der aber chemisch gebunden ist und thermisch nicht so hohe Temperaturen wie das reine Polyetherimid aushalten kann, aber dennoch für höhere Temperaturbeanspruchungen geeignet ist. Polyetherimid-Siloxan-Copolymere, geblendet mit Thermoplasten, wie dem hier in Rede stehenden Hochtemperatur-Thermoplast, der teilkristallin vorliegt, können durch geeignete Extrusionsverfahren flächig als Folie hergestellt werden, die ihrerseits eine ausreichende Elastizität aufweisen, um - in geschnittener Form - als Wickelbänder für Wickelband-Hauptisolationen eingesetzt zu werden.

Bevorzugt ist die teilentladungsresistent Folie zumindest aus einem Polymerblend zumindest dreier Blendpartner, in dem zumindest ein Copolymer auf Grundlage von Polyetherimid und Siloxan mit zumindest zwei Hochtemperaturthermoplasten geblendet vorliegt, wobei mindestens einer der Hochtemperatur-Thermoplasten teilkristallin vorliegt.

Nach einer vorteilhaften Ausführungsform der Erfindung liegt im Polymerblend - beispielsweise als amorpher - Hochtemperatur-"HT"-Thermoplast-Blendpartner Polyetherimid -PEI- vor.

Nach einer vorteilhaften Ausführungsform der Erfindung liegt im Polymerblend als teilkristalliner Hochtemperatur - "HT"-Thermoplast ein Polyetherketon und/oder ein Gemisch verschiedener Polyetherketone vor.

"Polyetherketone" -PEK - sind Polymere, in deren molekularen Rückgrat abwechselnd Keton- (R-CO-R) und Etherfunktionalitäten (R-O-R) vorkommen. Gut geeignet sind beispielsweise Polyaryletherketone -PAEK-, bei denen sich zwischen den funktionellen Gruppen jeweils eine in (1,4) -Position verknüpfte Arylgruppe befindet. Das starre Rückgrat der Polyetherketone und insbesondere der Polyaryletherketone verleiht den Materialien im Vergleich zu anderen Kunststoffen sehr hohe Glasübergangstemperaturen -Tgs- und/oder Schmelzpunkte, weshalb sie gemäß der Erfindung als zumindest ein Blendpartner des zumindest drei Blendpartner umfassenden Isolations-Polymerblend-Materials zum Ersatz von Glimmer durch TEresistentes Polymermaterial einsetzbar ist.

Geeignete Polyetherketone sind insbesondere:
- Poly(etheretherketon) - PEEK-,
- Poly(etherketonketon) - PEKK-,
- Poly(etheretheretherketon) - PEEEK -,
- Poly(etheretherketonketon) - PEEKK-,
- Poly(etherketonetherketonketon) -PEKEKK- und/oder
- Polyaryletherketon - PAEK -
sowie beliebige Kombinationen und/oder Mischungen der oben genannten Verbindungen.

Soweit in der Erfindung bereits getestet, sind die genannten Polyetherketone untereinander und mit den beiden anderen Blendpartner, insbesondere auch mit dem Copolymer auf Grundlage von Polyetherimid und Siloxan, beliebig mischbar und kombinierbar.

Nach einer vorteilhaften Ausführungsform der Erfindung ist vorgesehen, dass jeder von drei Polymerblend-Partner, - das zumindest eine Copolymer, zwei Thermoplasten, von denen zumindest einer teilkristallin vorliegt - jeweils in einer Konzentration zwischen 1 und 70 Gew% im Polymerblend enthalten sind.

Allgemeine Erkenntnis der Erfindung ist es, dass ein Gemisch aus 3 Blendpartner, einem Copolymer, insbesondere einem Siloxan-Polyetherimid-Copolymer mit zumindest einem teilkristallin vorliegenden Thermoplasten im Blend ein stabiles Gemisch ergibt, das als ungefülltes Material zur Herstellung einer Isolation einsetzbar und insbesondere auch zur Folienherstellung geeignet ist.

Ganz allgemein liegen in einem teilkristallinen Blendpartner Sphärolithe vor, die eine für thermoplastische Kunststoffe typische kugelförmige Überstruktureinheit bezeichnen. Der Begriff Sphärolith bezeichnet dabei allgemein ein kugeliges und/oder strahliges Kristallaggregat, wobei Sphärolithe selbst keine Kristalle im kristallografischen Sinn sind, sondern Aggregate, also Anhäufungen von sehr vielen, kleineren kristallinen Bereichen darstellen. Diese können durch Röntgenbeugung nachgewiesen werden. In einer polymeren Überstruktur mit Sphärolithen sind Kristallite radialsymmetrisch angeordnet und über amorphe Zwischenbereiche verbunden. Da Sphärolithe kristalline Bereiche umfassen und damit doppelbrechend sind, lassen sie sich mit Hilfe der Polarisationsmikroskopie nachweisen. Die lichtmikroskopisch nachweisbare Größe liegt zwischen 1µm und mehreren 100pm. Bei sehr kleinen Sphärolithen ist das oben beschriebene Muster im Mikroskop nicht mehr zu erkennen. Man erkennt nur noch eine diffuse Streuung des Lichts.

Als "Blend-Material", "Polymerblend" oder kurz "Blend" werden vorliegend rein physikalische Gemische aus zwei oder mehreren unterschiedlichen Polymeren bezeichnet. Die Eigenschaften der so entstehenden Kunststoffe unterscheiden sich von denen der Ursprungspolymere. Bei dieser rein physikalischen Mischung entstehen keine neuen chemischen Bindungen zwischen den Makromolekülen. Polymerblends werden im Kurzzeichen durch ein zwischen die Bestandteile gesetztes **"+"** gekennzeichnet, im Gegensatz dazu werden bei Copolymeren fortlaufende Buchstabenfolgen verwendet.

Als "Folie" wird vorliegend ein unter Normalbedingungen fester Werkstoff bezeichnet, der beispielsweise als falzbarer Werkstoff, wie beispielsweise insbesondere in Form eines Laminats aus dünnen Lagen des Materials gestapels, vorliegt. Das Laminat ist vorzugsweise zumindest zweilagig, wobei die Lagen - wiederum vorzugsweise - durch Laminierkleber verbunden sind. Es können zumindest zwei Lagen des gleichen Materials, aber auch verschiedenen Materials in einem Laminatstapel kombiniert vorliegen.

Dabei können alle oder einige Lagen eines derartigen Laminatstapels, das eine teilentladungsresistente Folie bildet, aus einem oder mehreren verschiedenen Ausführungsbeispielen eines Polymerblends nach der Erfindung und/oder eine Kombination aus zumindest einer Lage eines Polymerblends nach der Erfindung kombiniert mit einer Lage aus einem anderen Material, das beispielsweise zur Abdeckung des Polymerblends bei der Herstellung des Isolationssystems dient, im Laminat vorliegen.

Als Kurzzeichen werden für Polymere, wie sie als Blendpartner hier neben dem Copolymer auf Grundlage von Polyetherimid und Siloxan einsetzbar sind, DIN-genormte, mit dem USamerikanischen Standard ASTM weitgehend übereinstimmende, Großbuchstabenfolgen bezeichnet. Beispielsweise steht PEK für Polyetherketon und PEI für Polyetherimid.

Als Copolymer wiederum werden Polymere bezeichnet, die aus zwei oder mehr verschiedenartigen Monomereinheiten zusammengesetzt sind. Dabei kommen statistische Copolymere, Gradientencopolymere, alternierende Copolymere, Blockcopolymere und Pfropfcopolymere vor.

Nach einer vorteilhaften Ausführungsform der Erfindung hat sich der Einsatz von einem oder mehreren schwefelhaltigen Polymeren als zusätzliche Blendpartner - jeweils entweder teilkristallin oder amorph - als geeignet erwiesen, unter anderem weil auch hier eine Folienherstellung und auch die Verarbeitung durch Extrusion ohne nennenswerte Entmischung mit den restlichen Blendpartnern möglich ist und die Teilentladungsresistenz nochmal verbessert wird.

Dabei gibt es sowohl teilkristallin als auch amorph vorliegende schwefelhaltige Polymere, wobei die teilkristallin vorliegenden schwefelhaltigen Polymere wie z.B. Polyphenylensulfid - PPS - zwar auch vorrangig zur Erhöhung der Teilentladungsresistenz eingesetzt werden, aber auch wegen der Sphärolithen im Blend, die eine gewissen Rest-Festigkeit oberhalb des Tgs bewirken, so dass die polymeren Bestandteile des Isolationssystems bei Betriebs-Temperaturen oberhalb des Tgs nicht abtropfen, sondern gummiartig im Isolationssystem verbleiben und sich bei Abkühlung wieder verfestigen.

Dabei ist es insbesondere vorteilhaft, wenn die Menge an zugesetztem schwefelhaltigem Polymer im Bereich zwischen 1 Gew% und 25 Gew%, insbesondere zwischen 3 Gew% und 20 Gew% und besonders bevorzugt zwischen 4 Gew% und 15 Gew% liegt.

Nach einer vorteilhaften Ausführungsform liegen die drei Blendpartner, Copolymer, und - beispielsweise - PEI und PEEK in ungefähr gleichen Masseanteilen im Blend vor, wobei beispielsweise alle drei Partner im Bereich zwischen 15 Gew% und 33 Gew%, insbesondere zwischen 20 Gew% und 30 Gew%, besonders bevorzugt zwischen 23 Gew% und 27 Gew% vorliegen.

Neben der Applikation der teilentladungsresistenten Folie durch Umwickeln des Leiters in Form eines Wickelbandes kann das teilentladungsresistente Isolationsmaterial, hier kurz als "siloxanmodifiziertes Polyimid mit teilkristallinem Thermoplasten" bezeichnet, auch als Laminat - beispielsweise in Form einer Abdeckung, insbesondere als zwei Formkörper in L-Form auf die Spulenschenkel einer Leiterwicklung - aufgebracht und - wiederum beispielsweise durch Heißpressen - fixiert werden.

Insbesondere in der Hairpin-Technologie für Statoren bei Traktionsmotoren kommt es vermehrt neben der herkömmlichen Spulenwickeltechnik in Ständerblechpaketen zum Einsatz von Steckspulen, welche in die Statornuten des Ständerblechpakets eingefügt werden. Diese Steckspulen können beispielsweise vor dem Einbringen in die Nut durch Einlegen der Spulenschenkel in entsprechende Negativ-Formen aus siloxanmodifiziertem Polyimid mit teilkristallinem Thermoplasten und anschließendes Heißpressen isoliert werden, ohne dass Wicklungen für die Hauptisolation erforderlich sind.

Herkömmlich werden Teilleiterisolierung, Deckband, Hauptisolierung und Nutauskleidung aus Glimmerband hergestellt. Durch die hier erstmals offenbarte Erfindung einer teilentladungsresistenten Folie mit einer Faserverstärkung kann auf das Glimmerband zumindest bei der Nutauskleidung und der Hauptisolierung, sowie optional bei der Teilleiterisolierung verzichtet werden.

Die Kombination aus Faserverstärkung und teilentladungsresistenter Folie kann auch als fester flächiger Isolationswerkstoff in Form eines Wickelbandes eingesetzt werden.

Als "flächiger fester Isolationswerkstoff" wird eine Kombination aus einem Träger und einem festen isolierenden Material mit Barrierewerkstoff bezeichnet. Herkömmlich ist ein Glimmerband ein typischer flächiger fester Isolationswerkstoff. Erfindungsgemäß wird eine Kombination aus einer teilentladungsresistenten Folie mit Faserverstärkung so bezeichnet, wobei die teilentladungsresistente Folie aus einem Polymerblend eines Copolymers auf Grundlage von Polyetherimid und Siloxan ist, das mit zumindest einem teilkristallinen Hochtemperaturthermoplasten geblendet ist. Bei der Herstellung des erfindungsgemäßen Isolationsmaterials in Form eines Wickelbandes und/oder in Form einer Negativ-Form, z.B. zweier L-Formen, in die ein Spulenschenkel einlegbar ist, wird dabei entweder die verstärkte Folie, in der die Verstärkungsfasern eingebettet sind, gewickelt und/oder geformt oder zunächst die Ständerspule mit Folie umwickelt oder in die Negativ-Form eingelegt und danach mit der Faserverstärkung und/oder mit dem Gewebe versehen.

Als Folie wird generell ein homogenes Flächengebilde, beispielsweise herstellbar durch Extrusion eines Polymerblends, bezeichnet. Aus den Folien können Breitbänder und/oder schmale Isolierbänder geschnitten werden. Die Bänder können, zur Herstellung einer Negativ-Form beispielsweise in mehreren Lagen laminiert werden.

Die Verstärkungsfasern können als Fasern, als Gewebe, als Gelege und/oder als Vlies vorliegen. Die Fasern können als Kurz-, Lang- und/oder als Endlosfasern vorliegen. Beliebige Mischungen der Faserarten und Faserzusammensetzungen sind möglich. Typischerweise geeignete Verstärkungsfasern sind Glasfasern, Basaltfasern, Kunstfasern, wie z.B. Aramidfasern, insbesondere auch p- und/oder mAramid-Fasern.

Die Leiter einer Spule in der Nut eines Ständerblechpakets sind zunächst gegeneinander durch eine so genannte Teilleiterisolation isoliert. Diese Teilleiterisolation bildet ein Element der Hauptisolation und ist dielektrisch. Teilleiterisolationen können als Isolationsbandagen aufgebracht werden, also um die Leiter gewickelt werden. Teilleiterisolationen können aber auch durch Spritzguss, durch Extrusion, durch Aufbringen von Drahtlack und/oder Verguss hergestellt werden. Im Einzelfall richtet sich das nach den zu erwartenden Betriebsspannungen, der Bemessungsspannung der elektrischen rotierenden Maschine, der Strombelastung der einzelnen Leiter und/oder nach dem Querschnitt und/oder Umfang des Leiters.

Die mit Teilleiterisolation umgebenen Leiter liegen in einer Nut eines Ständerblechpakets beispielsweise gestapelt vor. Die einzelnen Stapel, mehrere Leiter mit Teilleiterisolation umfassend, werden zur Bildung der Hauptisolation mit der so genannten Hauptisolierung umgeben. Gemäß der vorliegenden Erfindung ist diese Hauptisolierung aus der offenbarten teilentladungsresistenten Folie mit Verstärkungsfasern und nicht wie herkömmlich aus Glimmerband.

Zur Hauptisolierung gehört bei Hochspannungsanwendungen, die gemäß der vorliegenden Erfindung vor allem im Fokus stehen, neben der Teilleiterisolierung auch noch die Hauptisolierung.

Eine Teilentladungs-resistente Folie, wie sie gemäß der vorliegenden Erfindung einsetzbar ist, ist aus der DE 10 2020208760.1 und/oder aus der DE 20 2021 106 928 oder der EP 21216016 bekannt.

Die Bewertung der Teilentladungsresistenz der Teilentladungsresistenten Folie erfolgt via Oberflächenprofilometer über die Ermittlung des spezifischen Erosionsvolumens nach der elektrischen Alterung. Diese wird in Anlehnung an die IEC 60343 durchgeführt. Der Versuchsaufbau sowie Testbedingungen können in der Veröffentlichung: n. Müller; S.Lang; R.Moos: "Influence of ambient conditions on electrical partial discharge resistance of epoxy anhydride based polymers using IEC 60343 method". Transactionson Dielectrics and Elektrical Insulation 2019.

Nach einer vorteilhaften Ausführungsform ist das Polyetherimid-Siloxan-Copolymer ein Block-Copolymer.

Der Anteil an Siloxan im Copolymer liegt im Bereich von 0,1Gew% bis 90Gew%, insbesondere bei 10Gew% bis 60Gew% und insbesondere bei 20Gew% bis 40Gew%, bezogen auf das Gesamtgewicht des Copolymers.

Nach einer vorteilhaften Ausführungsform liegt der atomare Anteil an Silizium-Atomen im Copolymer bei 1 bis 25 %, insbesondere bei 5 bis 15 %.

Nach einer vorteilhaften Ausführungsform der Erfindung ist das Polyetherimid-Siloxan-Copolymer ein Block-Copolymer der allgemeinen Formel (I)

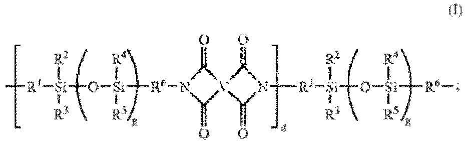

wobei
- **R**¹⁻⁶ gleich oder ungleich sind und ausgewählt aus der Gruppe der
   ∘ substituierten oder unsubstituierten, gesättigten, ungesättigten oder aromatischen Monocyclen mit 5 bis 30 Kohlenstoffatomen,
   ∘ substituierten oder unsubstituierten, gesättigten, ungesättigten oder aromatischen Polycyclen mit 5 bis 30 Kohlenstoffatomen,
   ∘ substituierten oder unsubstituierten, gesättigten Kohlenwasserstoffen mit 1 bis 30 Kohlenstoffatomen,
   ∘ substituierten oder unsubstituierten, ungesättigten Kohlenwasserstoffen mit 2 bis 30 Kohlenstoffatomen;
- **V** steht für eine 4-Valenzen habende Linkergruppe, ausgewählt aus der Gruppe der
   ∘ substituierten oder unsubstituierten, gesättigten, ungesättigten oder aromatischen Monocyclen und Polycyclen mit 5 bis 50 Kohlenstoffatomen,
   ∘ substituierten oder unsubstituierten, gesättigten Kohlenwasserstoffen mit 1 bis 30 Kohlenstoffatomen,
   ∘ substituierten oder unsubstituierten, ungesättigten Kohlenwasserstoffen mit 2 bis 30 Kohlenstoffatomen,
   ∘ sowie beliebig kombinierten Linkergruppen, die zumindest eine der vorgenannten Gruppen umfassen;
- **g** beträgt 1 bis 30 und
- **d** beträgt 2 bis 20.

Nach einer weiteren vorteilhaften Ausführungsform der Erfindung können in dem Copolymer ein oder mehrere Additive enthalten sein. Beispielsweise können ein oder mehrere Metalloxid(e), wie z.B. TiO₂, Fe₂O₃ und/oder MnFe₂O_{4 und/}oder elektrisch nichtleitfähige Kohlenstoff basierte Füllstoffe, wie z.B. Industrieruß als Additive eingesetzt werden.

Als "Siloxan" wird vorliegend grundsätzlich eine Verbindung mit zumindest einer -Si-O-Si-Einheit verstanden, insbesondere solche, die im Polymer ein Si-O-Si-Rückgrat wie es in Siliconen üblich ist, bilden. Beispielsweise sind ein Polydialkylsiloxan, wie das Polydimethylsiloxan, oder Polydiarylsiloxan, wie das Polydiphenylsiloxan einfache Formen eines Siloxans.

Natürlich gibt es auch gemischte Formen von Siloxanen wie beispielsweise ein Polyarylalkylsiloxan.

Als Polyetherimid oder "PEI" wird ein thermoplastischer Kunststoff bezeichnet, der vielfältig einsetzbar ist, weil er hochtemperaturbeständig ist, als flammwidrig eingestuft, weil er geringe Rauchentwicklung zeigt, wenn er dennoch mal brennt. PEI hat hohe Festigkeit, auch hohe elektrisch Durchschlagsfestigkeit, geringes Gewicht und ist gegen UV-Licht und Gammastrahlen beständig. Insbesondere ist PEI als "ULTEM^{®}" handelsüblich.

Optional wird ein Imprägnierharz oder ein Nutkleber, insbesondere ein aus der DE 102021201666 bekannter leitfähiger Nutkleber zur Füllung der Nut zusätzlich eingesetzt. Imprägnierharze für Nutauskleidungen und/oder Wickelbandisolationen sind allgemein bekannt. Als Imprägnierharz wird ein Duromer und/oder ein Hochtemperatur-Thermoplast verwendet. Dabei kann beispielsweise Polyester, Formaldehyd, Epoxid, Novolak, Silikon, Polyesterimid, Polyurethan sowie beliebige Mischungen, Blends und Copolymere der vorgenannten Verbindungen eingesetzt werden.

Die faserverstärkten Isolationsstoffe der in der Nut eingelegten Leiter werden mit diesen Imprägnierharzen oder dem Nutkleber imprägniert und die Imprägnierung respektive der Nutkleber dann -vorzugsweise durch Anlegen einer Spannung an die Leiter - ausgehärtet damit das Isolationssystem fertiggestellt.

Als Thermoplaste können beispielsweise Polyaryle wie Polyphenylensulfid, Polyethersulfon, Polyetherketon, aromatische Polyester, Polyarylate, Polyamide, Polyaramide, Polyimide, Polybenzimidazole, Polyetherimide und/oder Polyamide sowie beliebige Mischungen, Blends und Copolymere der vorgenannten Verbindungen eingesetzt werden. Imprägnierharze für Nutauskleidungen und/oder Wickelbandisolationen werden auch als Kleber zwischen den Lagen der Isolation untereinander und/oder zwischen den isolierten Leitern und der Nut eingesetzt. Die faserverstärkten Isolationsstoffe werden optional mit diesen Imprägnierharzen verklebt, vergossen und/oder imprägniert.

Unter dem Handelsnamen "Siltem^{™}" ist ein Polyetherimid-Siloxan-Copolymer erhältlich, dass hier für das Polymerblend schon erfolgreich eingesetzt und getestet wurde. Das Siltem ist ein amorphes thermoplastischen Polyetherimid-Siloxan-Copolymer und kombiniert die Temperaturbeständigkeit des PEI mit der Flexibilität eines Silicon-Elastomers.

Aufgrund der festgestellten Teilentladungsresistenz eignet sich das vorgestellte Polyetherimid-Siloxan-Copolymer im Blend mit zumindest einem teilkristallinen Hochtemperatur-Thermoplasten als Folien-Isoliermaterial, sowohl für Wickelband-Isolationen als auch für Abdeckungen, besonders im Einsatz von Motoren, sowohl für die Traktion als auch als Antriebsmotor, aber auch für Generatoren wie z.B. einem Windkraftgenerator. Durch seine hervorragenden Dehnungseigenschaften erweitert es das Designspektrum von -beispielsweise - Traktionsmotoren.

Die Einsatz von Glimmer wird durch den Einsatz des Polyetherimid-Siloxan-Copolymers entweder ganz überflüssig oder zumindest stark reduziert.

Damit ist es ein erreichbares Ziel, sowohl die mAramidenthaltenden Nutauskleidungen, ebenso wie die Polyimidenthaltenden Isolierbänder mit dem erfindungsgemäßen Flächenisolationsstoff aus Polymerblend herzustellen, ohne bei der Leistungsdichte der Motoren oder Generatoren Abstriche machen zu müssen. Vor allem ist es möglich, in beiden Isolationssystemen das Glimmerpapier und/oder Glimmerband, die jeweils Glimmer auf einem Träger, wie beispielsweise Glasgewebe, und zur Verbindung der Glimmerplättchen einen Bandkleber - mindestens - umfassen, durch das Polymerblend, das unter anderem durch Flächen-Extrusion verarbeitet werden kann, zu ersetzen.

Im Folgenden wird anhand einer Figur zum Stand der Technik am Beispiel Micalastic-THD^{®} und einer Figur einer beispielhaften Ausführungsform der Erfindung näher erläutert:
Figur 1 zeigt den Stand der Technik, wie der Aufbau einer Nut einer Ständerwicklung eines Stators in einem Elektromotor gemäß der gängigen Technik Micalastic-THD^{®} aussieht:
Zu erkennen ist die Nut 1, ein Teil des Ständerblechpakets einer elektrischen rotierenden Maschine und mit isoliertem Leiter befüllt. Unten am Nutboden befindet sich nach dem Stand der Technik ein Nutgrundstreifen 6. Diesem entspricht oben als Abschluss der Nutverschlußstreifen 5 und mittig die Zwischenlage 4.

Zu erkennen sind acht Leiter 2, in dem Fall als Kupferflachdraht ausgebildet. Diese sind von einer Teilleiterisolierung 3 umgeben, damit kein Kurzschluss von einem zum anderen Teilleiter vorkommen kann. Der Stapel an Teilleiter-isolierten Leiterelementen 2 wird auch Spule genannt. Bei der Hairpin oder I-Pin Technologie haben die Spulenschenkel entsprechende Formen. Die Teilleiterisolierung genau wie das Wickelband 7, das Deckband 8 und die Nutauskleidung 9 können alle aus Glimmerband gemacht sein. Die Elemente Wickelband 7, Deckband 8 und Nutauskleidung 9 bilden zusammen die Hauptisolierung. Alle genannten Elemente Nutverschlußstreifen 5, Nutgrundstreifen 6, Zwischenlage 4 und Teilleiterisolierung 3 bilden zusammen mit den Elementen der Hauptisolierung die Hauptisolation des Leiters.

Diese ist dielektrisch und setzt sich damit - bis auf den Nutgrundstreifen, der optional leitfähig sein kann, vom Au-βenglimmschutz AGS und Endenglimmschutz EGS, sowie von der Innenpotentialsteuerung IPS ab.

Die Hauptisolierung der Spulen umfasst mehrere Lagen Glimmerband nach dem Stand der Technik wie in Figur 1 gezeigt. Diese werden herkömmlich gemäß VPI imprägniert, aus dem Tauchbad wieder herausgenommen und zur Herstellung des Isolationssystems mehrere Stunden auf hohe Temperatur zur Aushärtung gebracht.

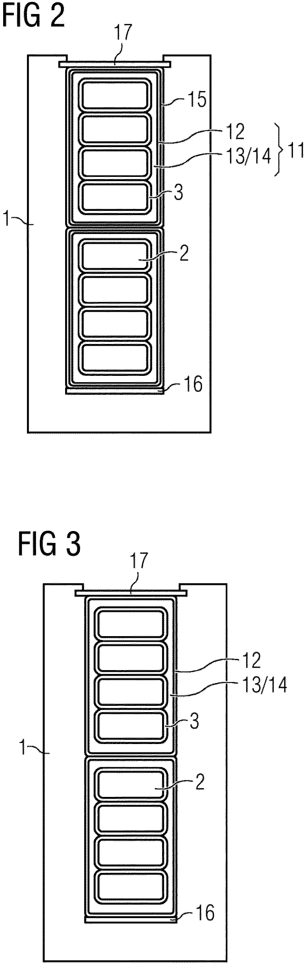

Demgegenüber wird in Figur 2 der entsprechende Aufbau gemäß vorliegender Erfindung gezeigt:
Figur 2 zeigt wieder eine Nut 1 eines Ständerblechpakets wie Figur 1. Allerdings ist im Gegensatz zu Figur 1 weder Glimmerband noch Wickelband 7, 13 zwingend erforderlich, sondern die Folie - z.B. schon mit Faserverstärkung 12 - kann auch in Form einer Abdeckung 14 mit der Spule heiß verpresst werden. Bei der Hairpin- und/oder I-Pin Technologie richtet sich die Geometrie der Spulen-Abdeckung 14 natürlich nach der Form der Spule. Ein Spulenschenkel kann beispielsweise durch Aufbringen der Folie mit oder ohne Faserverstärkung in Form zweier L-förmiger Abdeckungen 14 heiß verpresst werden. Wenn die Faserverstärkung 12 nicht mit der Folie 13,14 mit verpresst wird, dann wird sie nach erfolgtem Heißpressen aufgebracht.

Die Hauptisolierung 11 aus heißgepresster Folie 13,14 in Form von Wickelband 13 und/oder Abdeckung 14, mit oder ohne Faserverstärkung 12, kann auch ohne Wicklung durch Heißpressen der Spule, respektive des Teilleiter-Stapels 2,3, mit einer Negativ-Form 14 aus der Folie, beispielsweise als Laminat mit mehreren Lagen vorliegend, hergestellt werden. Die einzelnen Laminatlagen können dabei aus verschiedenem Material sein, beispielsweise kann eine erfindungsgemäß teilentladungsresistente Folie mit Faserverstärkung im Laminatstapel mit einer oder mehreren anderen Folien, wie z.B. PEEK Folie und/oder PEI Folie und/oder sonstigen Folienmaterialien, die zweckmäßig an der Stelle einsetzbar sind. Ein Laminataufbau für eine Spulen-Abdeckung 14 kann verschiedenste Lagen in beliebiger Kombination umfassen. Die Faserverstärkung 12 kann dabei an beliebiger Stelle im Laminatstapel vorgesehen sein, sie ist nicht zwingend außen vorgesehen, wie gemäß den Figuren 2 und 3 dargestellt, sondern kann ebenso gut beispielsweise mittig in der Folie eingebettet vorliegen.

Anstelle der Abdeckung 14 kann auch ein mit Folie 13 und Faserverstärkung 12 umwickelter Teilleiterstapel heiß verpresst werden.

In Figur 2 ist ein Nutgrundstreifen 16 gezeigt, der insbesondere aus Hartgewebe, z.B. Carbongewebe, gemacht ist und mechanischen Schutz beim Einbringen der isolierten Spule in die Nut 1 bietet. Bei der in Figur 2 gezeigten Ausführungsform ist ein leitfähiger Nutkleber 15 zwischen der Hauptisolierung 11 und der Nut 1 vorgesehen, deshalb ist es vorzugsweise vorgesehen, dass der Nutgrundstreifen 16 auch leitfähig ist.

Vergleichbar zu Figur 1 ist die Füllung der Nut 1 durch acht Leiterelemente 2 in zwei Stapeln zu je vier Leiter 2 aus Kupferflachdraht realisiert, die mit Teilleiterisolierung 3 ummantelt sind. Die Teilleiterisolierung kann beispielsweise siloxanmodifiziertes Polyimid umfassen und durch Spritzguss, durch Extrusion, durch Lackierung und/oder durch Umwickeln mit der teilentladungsresistenten Folie gemäß DE 10 2020208760.1 und anschließendes Heißpressen hergestellt sein. Ein Stapel von teilleiterisolierten Leiterelementen 2,3 wird auch "Spule" genannt. Der Teil einer Spule, der in einer Nut des Ständerblechpakets vorgesehen ist, ist ein Spulenschenkel.

Optional kann vorgesehen sein, dass die Teilleiterisolierung 3 der Leiter 2 durch Drahtlack mit anschließender Umwicklung mit Verstärkungsfasern - nicht gezeigt - realisiert ist.

Auf die Teilleiterisolierung wird teilentladungsresistente Folie 13,14 aus dem Polymerblend mit semikristallinem, Hochtemperatur-Thermoplasten durch Umwickeln des Stapels oder Abdecken des Stapels aus - wie in Figur 2 dargestellt - vier Leiterelementen 2 mit Teilleiterisolierung 3, aufgebracht. Die Wicklung und/oder die Abdeckung mit der teileentladungsresistenten Folie 13,14 kann dabei ein- oder mehrlagig vorgesehen sein.

Nach dem Heißverpressen der teilentladungsresistente Folie 13,14 auf der Spule wird anschließend zumindest eine Lage Faserverstärkung 12 gewickelt, wenn die Faserverstärkung 12 noch nicht in der Folie 13,14 eingebettet ist. Die Faserverstärkung 12 liegt beispielsweise in Form eines Gewebes und/oder eines Vlies vor.

Über der Faserverstärkung 12 und/oder an den Innenflächen der Nut 1 ist gemäß Figur 2 eine oder mehrere Lagen Nutkleber 15 vorgesehen, der als Gleit- und Haftmittel beim Einbringen der isolierten Spule in die Nut 1 dient.

Beim Ausführungsbeispiel gemäß Figur 2 ist auch wieder ein Nutverschlussstreifen 17 vorgesehen.

Figur 3 zeigt eine andere vorteilhaften Ausführungsform der Erfindung, wobei hier kein leitfähiger Nutkleber 15 vorgesehen ist.

Anstelle des leitfähigen Nutklebers 15 wird bei der Ausführungsform gemäß Figur 3 die Nut 1 nach dem Einbringen der isolierten Spule mit dem Aufbau von innen nach außen Leiter 2, Teilleiterisolierung 3, teilentladungsresistente Folie 13,14 und Faserverstärkung 12 mit Imprägnierharz imprägniert, beträufelt, getaucht, besprüht und/oder vergossen, je nach Herstellungsverfahren.

Nachdem das Imprägnierharz nicht leitfähig ist ist bei dem in Figur 3 gezeigten Ausführungsbeispiel auch der Nutgrundstreifen 16 nicht leitfähig, sondern lediglich eine mechanische Stütze.

Die hier gezeigten Ausführungsformen veranschaulichen der Übersichtlichkeit halber weder den IPS, den AGS noch einen EGS, je nach Ausführungsform Bestandteil des Isolationssystems sein können.

Die hier skizzierte Herstellungsmethode eines Isolationssystems über beispielsweise Extrusion der Teilleiterisolation 3 Leiter 2, anschließendes Umwickeln mit faserverstärkter Folie 13 oder Abdeckung mit Folienlaminat 14, Heißpressen und Einbringen in die Nut 1 und Härtung durch einfaches Anlegen von Strom/Spannung an die Leiter ist beispiellos praktisch automatisierbar und kostengünstig. Es entfallen gegenüber dem Stand der Technik des "VPI" Prozesses nicht nur etliche schwierige Prozessschritte - wie Einbringen in das Tauchbad, Anlegen von Vakuum -, es wird auch wesentlich energieeffizienter gearbeitet, weil genau da, wo die Härtung der Harze, wie des Nutklebers und/oder des Imprägniermittels, stattfinden soll, auch die Energie in Form von Temperatur durch Anlegen von Spannung eingebracht wird und nicht - wie gemäß VPI mühsam das gesamte Ständerblechpaket auf die zur Härtung des Imprägniermittels erforderliche Temperatur gebracht und stundenlang gehalten werden muss.

Optional kann der Nutgrundstreifen, eine Zwischenlage zwischen Teilleiterstapel, der IPS, der AGS und/oder EGS, beispielsweise als Prepreg, insbesondere auch als Prepreg gemäß DE 10 2022 202324.2 realisiert sein.

Durch den Aufbau der Hauptisolation aus der teilentladungsresistenten Folie ist es möglich, verschiedene Folien in einem Laminat und/oder Folienstapel für die Herstellung des Hauptisolation einzusetzen.

Der Nachweis der erfindungsgemäßen Technik gelingt bezüglich der analytischen Identifikation der Basisbestandteile des Polymerblends mit gängigen analytischen Methoden, wie z.B. FTIR. Die sich ausbildende verglaste Schicht der Hauptisolation kann mittels REM detektiert werden. Zudem kann mittels EDX eine Elementaranalyse den Nachweis der Bestandteile zumindest hinsichtlich des Siliziums und/oder der Antioxidationsbestandteile bringen.

Durch die vorliegende Erfindung wird ein rationeller Prozess, der hoch automatisierbar ist, möglich. Die Nachteile des VPI-Prozesses werden vermieden und der Einsatz von Glimmer optional ganz vermieden. Durch den Einsatz des isolierenden Materials in Form von unter anderem oder allein vorliegender teilentladungsresistenter Folie 13 und/oder Spulen-Abdeckung 14 aus einem Polymerblend mit Faserverstärkung können dünne Wandstärken realisiert werden, was die Effizienz der Maschine erhöht. Durch die Einbringung von Faserverstärkung handelt es sich um einen sehr robusten Prozess.

### Bezugszeichenliste

- 1: Nut eines Ständerblechpakets
- 2: Leiter
- 3: Teilleiterisolierung
- 4: Zwischenlage
- 5: Nutverschlusstreifen
- 6: Nutgrundstreifen
- 7: Wickelband - Glimmerband
- 8: Deckband
- 9: Nutauskleidung
- 10: Hauptisolierung nach dem Stand der Technik
- 11: Hauptisolierung nach der Erfindung
- 12: Faserverstärkung
- 13: Wickelband Folie
- 14: Folie als Abdeckung der Spule
- 15: Nutkleber
- 16: Nutgrundstreifen
- 17: Nutverschlussstreifen

## Patentansprüche

1. Isolationssystem für elektrische Leiter in einem Ständerblechpaket, Faserverstärkung (12) und ein Isolationsmaterial (13,14) umfassend, wobei das Isolationsmaterial ein Polymerblend aus einem Copolymer auf Grundlage von Polyetherimid und Siloxan mit zumindest einem Hochtemperaturthermoplasten geblendet, enthält, in dem der Hochtemperaturthermoplast teilkristallin vorliegt.

2. Isolationssystem nach Anspruch 1, wobei im Isolationsmaterial ein dritter Blendpartner im Polymerblend in Form eines amorphen Hochtemperatur-Thermoplasten vorliegt.

3. Isolationssystem nach einem der Ansprüche 1 oder 2, wobei der teilkristalline Hochtemperatur-Thermoplast in Form von Polyetherketon PEK vorliegt.

4. Isolationssystem nach Anspruch 3, wobei das Polyetherketon eine Mischung verschiedener Verbindungen umfasst.

5. Isolationssystem nach einem der vorhergehenden Ansprüche 2 bis 4, wobei jeder der drei Polymerblend-Partner jeweils in einer Konzentration zwischen 1 und 70 Gew% im Polymerblend vorliegen.

6. Isolationssystem nach einem der vorhergehenden Ansprüche, bei der das Isolationsmaterial in Form eines Laminatlagen-Stapels vorliegt.

7. Isolationssystem nach einem der vorhergehenden Ansprüche bei dem als amorpher Hochtemperatur-Thermoplast Polyetherimid PEI vorliegt.

8. Isolationssystem nach einem der vorhergehenden Ansprüche, bei dem als teilkristalliner Hochtemperatur-Thermoplast eine Verbindung oder eine Mischung, ausgewählt aus der Gruppe folgender Verbindungen:
- Poly(etheretherketon) - PEEK-,
- Poly(etherketonketon) - PEKK-,
- Poly(etheretheretherketon) - PEEEK -,
- Poly(etheretherketonketon) - PEEKK-,
- Poly(etherketonetherketonketon) -PEKEKK- und/oder
- Polyaryletherketon - PAEK -
vorliegt.

9. Isolationssystem nach einem der vorhergehenden Ansprüche, bei dem die Faserverstärkung in Form von Fasern, Vlies, Gelege und/oder als Gewebe vorliegt.

10. Isolationssystem nach einem der vorhergehenden Ansprüche, bei dem das Isolationsmaterial (13) in Form einer Folie vorliegt.

11. Isolationssystem nach einem der vorhergehenden Ansprüche, bei dem das Isolationsmaterial (13,14) in Form einer Abdeckung vorliegt.

12. Isolationssystem nach einem der vorhergehenden Ansprüche, bei dem die Faserverstärkung (12) in Form von Fasern, die Kurzfasern, Langfasern und/oder Endlosfasern umfassen, vorliegt.

13. Isolationssystem nach einem der vorhergehenden Ansprüche, bei dem die Faserverstärkung (12) in Form von Fasern ausgewählt ist aus Glas-, Basalt-, mAramid-, p-Aramid- und/oder organische Kunstfasern sowie beliebigen Kombinationen der genannten Fasermaterialien ausgewählt ist.

14. Isolationssystem nach einem der vorhergehenden Ansprüche, das einen Nutkleber (15) umfasst.

15. Isolationssystem nach einem der vorhergehenden Ansprüche, das ein Imprägnierharz umfasst.
